# EUROPÄISCHE PATENTSCHRIFT

(11) **EP 3 068 006 B1**
(45) Veröffentlichungstag und Bekanntmachung des Hinweises auf die Patenterteilung: **10.04.2019**
(21) Anmeldenummer: 16154316.0
(22) Anmeldetag: 04.02.2016
(51) Int. Cl.: H02J 3/16, H02J 3/38

(54) **STEUERUNG FÜR EINE WINDENERGIEANLAGE/EINEN WINDPARK UND STEUERVERFAHREN**
CONTROL FOR A WIND TURBINE/ WIND FARM AND CONTROL METHOD
COMMANDE D'ÉOLIENNE /DE PARC ÉOLIEN ET PROCÉDÉ DE COMMANDE

(30) Priorität: 13.03.2015 DE 102015003169
(43) Veröffentlichungstag der Anmeldung: 14.09.2016
(73) Patentinhaber: Senvion GmbH, 22297 Hamburg (DE)
(72) Erfinder: Koestl, Tobias, 20457 Hamburg (DE); Mews, Oliver, 24103 Kiel (DE)
(74) Vertreter: Glawe, Delfs, Moll

(56) Entgegenhaltungen:
- EP-A1- 0 923 181
- DE-A1-102007 044 601
- DE-A1-102010 056 456
- DE-A1-102013 207 255
- US-A1- 2009 108 583
- US-A1- 2012 248 772

## Beschreibung

Die Erfindung betrifft eine Steuerung für eine Windenergieanlage bzw. einen Windpark. Die Steuerung ist dazu ausgelegt, Messwerte und/oder externe Anforderungen zu verarbeiten, um Steuervorgaben für den Betrieb der Windenergieanlage/des Windparks zu ermitteln. Die Steuerung umfasst einen Eingang für einen Istwert der Netzfrequenz. Die Erfindung betrifft außerdem ein zugehöriges Steuerverfahren.

Der Betrieb von Windenergieanlagen und Windparks erfolgt üblicherweise in Abhängigkeit von Umgebungsbedingungen und vom Betriebszustand der Windenergieanlage und/oder des Windparks sowie in Abhängigkeit von Anforderungen, die von außen herangetragen werden. Die Steuerung ist dazu ausgelegt, die relevanten Informationen zu verarbeiten und daraus Steuervorgaben für den Betrieb der Windenergieanlage bzw. des Windparks zu ermitteln. Die Steuervorgaben werden an geeignete Stellglieder der Windenergieanlage bzw. des Windparks übermittelt, sodass sich der Betriebszustand gemäß den Steuervorgaben einstellt. Zu den Größen, die in der Steuerung üblicherweise verarbeitet werden, gehören beispielsweise die Spannung, die Wirkleistung oder die Blindleistung.

Eine weitere Größe, die den Istzustand des Netzes charakterisiert, ist die Netzfrequenz. Weicht der Istwert der Netzfrequenz von einem Sollwert der Netzfrequenz ab, so ist dies ein Hinweis auf einen Fehler in der Leistungsbilanz. Allgemein hat es nämlich einen Anstieg der Netzfrequenz zur Folge, wenn mehr Leistung eingespeist wird als verbraucht wird. Umgekehrt sinkt die Netzfrequenz, wenn weniger Leistung eingespeist wird als verbraucht wird. Um die Leistungsbilanz wieder in Ordnung zu bringen, kann auf Erzeugerseite die Menge an eingespeister Wirkleistung angepasst werden bzw. auf Verbraucherseite der Verbrauch angepasst werden. So schlägt etwa die DE 10 2011 122 656 A1 vor, bestimmte Verbraucher in Abhängigkeit von der Netzfrequenz zuzuschalten oder abzuschalten US 2012/248772 A1 offenbart eine Steuerung für einen Windpark gemäß dem Oberbegriff der unabhängigen Ansprüche.

Der Erfindung liegt die Aufgabe zugrunde, eine Steuerung und ein Steuerverfahren vorzustellen, die dazu beitragen, das elektrische Netz zu stabilisieren. Ausgehend vom genannten Stand der Technik wird die Aufgabe gelöst mit den Merkmalen des Anspruchs 1. Vorteilhafte Ausführungsformen sind in den Unteransprüchen angegeben.

Erfindungsgemäß setzt die Steuerung eine Abweichung des Istwerts der Netzfrequenz von einem Sollwert der Netzfrequenz in eine Steuervorgabe für die Spannung um.

Zunächst werden einige Begriffe erläutert. Die Messwerte, die in der Steuerung verarbeitet werden, repräsentieren Informationen über Umgebungsbedingungen (beispielsweise Windstärke, Windrichtung usw.) oder Informationen über den Zustand von Elementen der Windenergieanlage oder des Windparks (beispielsweise Spannung, Wirkleistung, Blindleistung, elektrisches Drehmoment eines Generators usw.). Die Anforderungen von außen können beispielsweise Anforderungen eines Netzbetreibers sein, der bestimmte Vorgaben für den Betrieb eines Windparks macht, wie beispielsweise eine Sollspannung. Aus der Perspektive der Steuerung einer Windenergieanlage kann die Anforderung beispielsweise eine Vorgabe einer zentralen Steuerung des Windparks (Parkmaster) sein. Die Netzfrequenz bezeichnet die Frequenz der Wechselspannung im elektrischen Netz.

Die Erfindung macht sich zu Nutze, dass es durch Steuervorgaben für die Spannung möglich wird, einen mittelbaren Beitrag zur Stabilisierung des Netzes zu leisten. Mit der Erfindung wird ausgenutzt, dass bei Verbrauchern, die direkt und ohne Leistungselektronik an das Netz gekoppelt sind, die Leistungsaufnahme über die Spannung beeinflusst werden kann. Je höher die Spannung ist, desto mehr Leistung nimmt der Verbraucher auf, und umgekehrt. Durch eine geänderte Spannung im Netz kann also mittelbar auf die Leistungsbilanz Einfluss genommen werden. Im Unterschied dazu leisten Verfahren, bei denen auf Erzeugerseite die Einspeisung der Wirkleistung angepasst wird oder bei denen auf Verbraucherseite Verbraucher zugeschaltet oder abgeschaltet werden, einen unmittelbaren Beitrag zur Stabilisierung des Netzes.

Dass es einen Zusammenhang zwischen der Spannung im Netz und der Leistungsaufnahme von Verbrauchern mit konstantem Widerstand gibt, ist im Grundsatz bekannt, siehe etwa DE 10 2011 122 580 A1. Nicht beschrieben ist dort die Ermittlung einer Steuervorgabe für die Spannung in Abhängigkeit von der Netzfrequenz.

Windenergieanlagen sind im allgemeinen so ausgelegt, dass sie die Spannung im Netz über die Menge an bereitgestellter Blindleistung beeinflussen. Im Rahmen der Erfindung kann deswegen vorgesehen sein, dass die mit der Steuerung ermittelte Steuervorgabe für die Spannung umgesetzt wird in eine Blindleistungsanforderung für eine Windenergieanlage.

Es kann ein Rechenmodul vorgesehen sein, das unter Berücksichtigung weiterer Informationen die Steuervorgabe für die Spannung umrechnet in eine Blindleistungsanforderung für eine Windenergieanlage. Allerdings ist diese Berechnung im allgemeinen sehr komplex, da der Anteil bereitgestellter Blindleistung regelmäßig von vielen Faktoren abhängt. In einer bevorzugten Ausführungsform ist deswegen vorgesehen, dass die Steuervorgabe für die Spannung in Form eines Spannungssollwerts an einen Blindleistungsregler geleitet wird. Durch den Blindleistungsregler wird der Spannungssollwert in eine Blindleistungsanforderung für eine oder mehrere Windenergieanlagen umgesetzt. Der Blindleistungsregler kann ein Element einer Windenergieanlage sein.

Die mit der Steuerung ermittelte Vorgabe für die Spannung kann ein absoluter Spannungswert sein. Alternativ kann es sich um eine relative Steuervorgabe handeln, die auf die Momentan-Spannung bezogen ist, wobei es sich bei der Momentan-Spannung um einen Istwert oder um einen Sollwert handeln kann. Die zweite Steuervorgabe kann ein fester Spannungswert sein. Beispielsweise kann durch die Steuervorgabe die Momentan-Spannung eingefroren werden. Damit wird verhindert, dass das Netz durch eine Spannungsänderung destabilisiert wird.

In einer weiteren Ausführungsform kann die Steuervorgabe dergestalt sein, dass ein Schwellwert definiert wird, der in einer Richtung nicht überschritten werden darf. Bevorzugt ist eine Überschreitung des Schwellwerts nach oben ausgeschlossen, wenn die tatsächliche Netzfrequenz niedriger ist als der Sollwert, und eine Überschreitung des Schwellwerts nach unten ausgeschlossen, wenn die tatsächliche Netzfrequenz höher ist als der Sollwert. Der Schwellwert kann beispielsweise der Momentan-Spannung entsprechen.

Um zu verhindern, dass es durch die Steuervorgabe zu einer Überlastung von Komponenten einer Windenergieanlage oder des Windparks kommt, kann ein Begrenzer vorgesehen sein, der die Steuervorgabe so begrenzt, dass vorgegebene Spannungsgrenzen des Systems eingehalten werden.

Es ist möglich, dass die erfindungsgemäße Steuerung jede Netzfrequenzabweichung in eine Steuervorgabe für die Spannung umsetzt. Alternativ kann die Steuerung ein Totband der Netzfrequenzabweichung aufweisen, innerhalb dessen die Steuervorgabe passiv ist, also entweder keine Steuervorgabe für die Spannung ermittelt wird oder die Steuervorgabe nicht verwertet wird, um den Windenergieanlagen-Betrieb zu beeinflussen. Das Totband kann sich beidseits eines Sollwerts der Netzfrequenz erstrecken. Die Grenze des Totbands kann beispielsweise zwischen 0,1 Hz und 2 Hz, vorzugsweise zwischen 0,2 Hz und 1 Hz vom Sollwert der Netzfrequenz entfernt liegen. Das Totband kann symmetrisch bezogen auf den Sollwert der Netzfrequenz sein. Geht man bei einem symmetrischen Totband, von einer Netzfrequenz von 50 Hz und einem Schwellwert von 0,5 Hz aus, so wird das Totband bei 49,5 Hz bzw. bei 50,5 Hz verlassen. Innerhalb des Totbands stellt sich die Spannung auf konventionelle Weise ein, außerhalb des Totbands wird über die erfindungsgemäße Steuervorgabe Einfluss auf den Windenergieanlagen-Betrieb genommen.

Die Differenz aus dem Istwert der Netzfrequenz und dem Sollwert der Netzfrequenz (Frequenzabweichung) kann in der erfindungsgemäßen Steuerung ermittelt werden. Vorzugsweise wird der Messwert für den Istwert der Frequenz zuvor gefiltert, um zu verhindern, dass die Steuerung auf kurzzeitige Schwankungen im Frequenzsignal reagiert. Der Sollwert der Netzfrequenz kann in der Steuerung gespeichert sein oder von außen zugeführt werden.

Die erfindungsgemäße Steuerung kann so ausgelegt sein, dass sie ein erstes Steuermodul und ein zweites Steuermodul umfasst. Das erste Steuermodul kann ein Steuermodul sein, das unter Berücksichtigung der gemessenen Spannung, der gemessenen Wirkleistung und/oder der gemessenen Blindleistung einen Spannungssollwert ermittelt. Die Netzfrequenz wird in dem ersten Steuermodul vorzugsweise nicht berücksichtigt. Der Spannungssollwert ist vorzugsweise für eine Windenergieanlage bestimmt. In einer bevorzugten Ausführungsform ermittelt das erste Steuermodul Spannungssollwerte für mehrere Windenergieanlagen. Die Spannungssollwerte können für alle Windenergieanlagen gleich sein. Alternativ ist es möglich, dass individuelle Spannungssollwerte ermittelt werden, die für die einzelnen Windenergieanlagen unterschiedlich sein können.

Das zweite Steuermodul kann gemäß der Erfindung eingerichtet sein, um eine Abweichung des Istwerts der Netzfrequenz von einem Sollwert der Netzfrequenz in eine Steuervorgabe für die Spannung umzusetzen. Das erste Steuermodul und das zweite Steuermodul wirken vorzugsweise funktional zusammen. Das erste Steuermodul und das zweite Steuermodul können räumlich zusammen oder räumlich voneinander getrennt angeordnet sein.

Das erste Steuermodul und das zweite Steuermodul können so zusammenwirken, dass das erste Steuermodul Vorrang hat, wenn die Frequenzabweichung null ist oder der Istwert der Netzfrequenz innerhalb eines Totbands liegt, und dass das zweite Steuermodul nur dann Einfluss auf den Windenergieanlagen-Betrieb nimmt, wenn die Netzfrequenzabweichung außerhalb des Totbands liegt. Beispielsweise kann bei Verlassen des Totbands zwischen dem ersten Steuermodul und dem zweiten Steuermodul umgeschaltet werden, sodass nicht mehr der Spannungssollwert des ersten Steuermoduls, sondern die Steuervorgabe des zweiten Steuermoduls Einfluss auf den Windenergieanlagen-Betrieb nimmt. Alternativ kann bei Verlassen des Totbands die Steuervorgabe des zweiten Steuermoduls auf den Spannungssollwert des ersten Steuermoduls aufgeschaltet werden, sodass ein kombinierter Spannungssollwert entsteht, der auf den Windenergieanlagen-Betrieb Einfluss nimmt. Insbesondere ist es bei diesen Varianten möglich, dass das erste Steuermodul auf der Ebene des Parkmasters und das zweite Steuermodul in einer Windenergieanlage angeordnet ist.

In einer weiteren Ausführungsform kann die Steuerung so gestaltet sein, dass die Steuervorgabe des zweiten Steuermoduls eine Größe bildet, die in dem ersten Steuermodul neben weiteren Größen verarbeitet wird. Verarbeitet beispielsweise das erste Steuermodul einen Spannungssollwert als Eingangsgröße, so kann die Steuervorgabe des zweiten Steuermoduls auf diesen Spannungssollwert aufgeschaltet werden. Es entsteht dadurch ein veränderter Spannungssollwert, der in dem ersten Steuermodul als Eingangsgröße verarbeitet wird. Indem diese veränderte Eingangsgröße zusammen mit anderen Größen in dem ersten Steuermodul verarbeitet wird, entsteht ein Spannungssollwert als Ausgangsgröße, in dem die Steuervorgabe des zweiten Steuermoduls berücksichtigt wurde. Bei dieser Ausführungsform kann es von Vorteil sein, wenn sowohl das erste Steuermodul als auch das zweite Steuermodul auf der Ebene des Parkmasters angeordnet ist.

Der Spannungssollwert, der in dem ersten Steuermodul als Eingangsgröße verarbeitet wird, kann sich auf einen gemeinsamen Übergabepunkt eines Windparks beziehen. Der Spannungssollwert, der als Ausgangsgröße erzeugt wird, kann für eine oder mehrere Windenergieanlagen bestimmt sein. Die Zeitkonstante des ersten Steuermoduls ist vorzugsweise so gewählt, dass sich die Ausgangsgröße innerhalb weniger Sekunden an die geänderte Eingangsgröße anpasst.

Auch bei dieser Ausführungsform gilt, dass die Steuervorgabe des zweiten Steuermoduls vorzugsweise null ist, solange die Frequenzabweichung innerhalb des Totbands liegt. Eine von null verschiedene Steuervorgabe für die Spannung wird erzeugt, sobald der Istwert der Netzfrequenz außerhalb des Totbands liegt. Dabei wirkt die von dem zweiten Steuermodul erzeugte Steuervorgabe vorzugsweise ausschließlich spannungserhöhend, falls der Istwert der Netzfrequenz höher ist als der Sollwert. Die Steuervorgabe wirkt vorzugsweise ausschließlich spannungsvermindernd, falls der Istwert der Netzfrequenz niedriger ist als der Sollwert der Netzfrequenz. Die von null verschiedene Steuervorgabe kann zu dem Spannungssollwert addiert werden, der die Eingangsgröße für das erste Steuermodul bildet. Beispielsweise kann die Steuervorgabe über einen proportionalen Zusammenhang mit der Frequenzabweichung zusammenhängen. Vorzugsweise ist die Steuervorgabe auf eine untere und eine obere Grenze limitiert, um sicherzustellen, dass die Systemgrenzen eingehalten werden.

In einer bevorzugten Ausführungsform ist die erfindungsgemäße Steuerung ein Parkmaster, der Vorgaben für eine Mehrzahl von Windenergieanlagen ermittelt. Die Vorgaben können für alle Windenergieanlagen gleich sein. Alternativ kann der Parkmaster dazu ausgelegt sein, individuelle Vorgaben für die einzelnen Windenergieanlagen zu ermitteln, insbesondere individuelle Spannungssollwerte für die einzelnen Windenergieanlagen zu ermitteln.

Die Erfindung betrifft außerdem ein Verfahren zum Steuern einer Windenergieanlage/eines Windparks, bei dem Messwerte und/oder externe Anforderungen verarbeitet werden, um Steuervorgaben für den Betrieb der Windenergieanlage/des Windpark zu ermitteln. Bei dem Verfahren wird ein Istwert der Netzfrequenz verarbeitet. Erfindungsgemäß wird eine Abweichung des Istwerts der Netzfrequenz von einem Sollwert der Netzfrequenz in eine Steuervorgabe für die Spannung umgesetzt.

Das Verfahren kann mit weiteren Merkmalen fortgebildet werden, die im Zusammenhang der erfindungsgemäßen Steuerung beschrieben sind. Die Steuerung kann mit weiteren Merkmalen fortgebildet werden, die im Zusammenhang des erfindungsgemäßen Verfahrens beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: einen Windpark, der mit einer erfindungsgemäßen Steuerung ausgestattet ist;
- Fig. 2:: eine Ausführungsform einer erfindungsgemäßen Steuerung;
- Fig. 3:: ein Detail der Steuerung aus Fig. 2;
- Fig. 4:: eine weitere Ausführungsform einer erfindungsgemäßen Steuerung; und
- Fig. 5:: eine weitere Ausführungsform einer erfindungsgemäßen Steuerung.

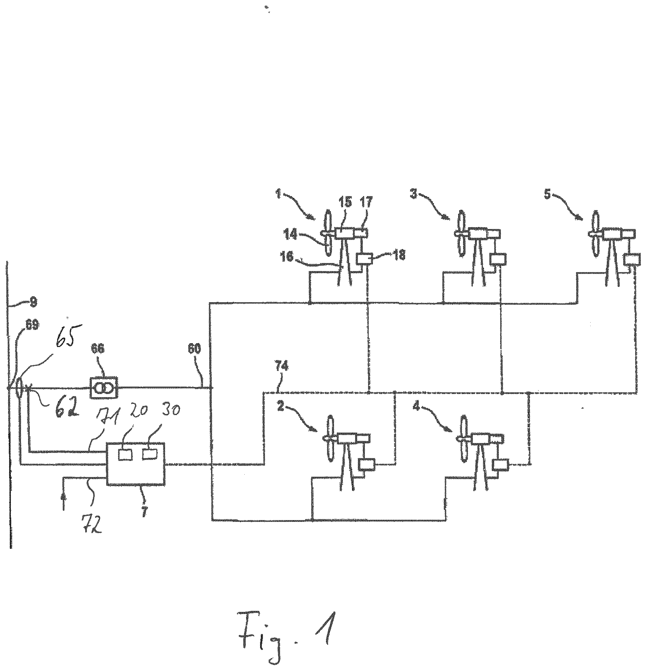

Ein in Fig. 1 gezeigter Windpark umfasst fünf Windenergieanlagen 1, 2, 3, 4, 5 und eine zentrale Steuerung (Parkmaster) 7. Die Windenergieanlagen 1 - 5 sind über ein windparkinternes Netz 60 an ein Übertragungsnetz 9 eines Energieversorgungsunternehmens zusammengeschlossen.

Der Aufbau der Windenergieanlagen 1 - 5 wird am Beispiel der Windenergieanlage 1 erläutert. Die Windenergieanlage 1 umfasst einen Rotor 14, der drehbar an einem Maschinengehäuse 15 an der Spitze eines Turms 16 angeordnet ist. Der Rotor 14 treibt einen Generator (nicht dargestellt) an. Es handelt sich vorzugsweise um einen doppelt gespeisten Asynchrongenerator, jedoch sind auch andere Bauarten möglich. Mit dem Generator ist ein Umrichter 17 verbunden. Er wandelt die von dem Generator gelieferte elektrische Leistung in einen dreiphasigen Drehstrom um, dessen Frequenz der Netzfrequenz entspricht. Der Betrieb der Windenergieanlage 1 ist kontrolliert von einer Anlagensteuerung 18. Die Anlagensteuerung 18 wirkt über geeignete (nicht dargestellte) Steuerleitungen auf die einzelnen Komponenten der Windenergieanlage 1 ein. Die Anlagensteuerung 18 umfasst insbesondere einen Blindleistungsregler, der dazu ausgelegt ist, eine dem Spannungssollwert entsprechende Blindleistung bereitzustellen. Weiter ist an der Windenergieanlage 1 ein Transformator (nicht dargestellt) vorgesehen, der die von dem Umrichter 17 ausgegebene Spannung auf ein höheres Niveau transformiert.

Das windparkinterne Netz 60 ist über einen Verknüpfungspunkt 69 an das Übertragungsnetz 9 angeschlossen. Der Verknüpfungspunkt 69 dient zur Einspeisung der von den Windenergieanlagen 1 - 5 erzeugten und in das windparkinterne Netz 60 geleiteten elektrischen Leistung. Das Übertragungsnetz 9 ist in dem dargestellten Ausführungsbeispiel ein Hochspannungsnetz. Zur Anhebung der auf Mittelspannungsebene liegenden Spannung im windparkinternen Netz 60 ist ein Hochspannungstransformator 66 vorgesehen.

Der Parkmaster 7 dient zur Kontrolle der in das Übertragungsnetz 9 eingespeisten elektrischen Leistung. Er übt eine Leitfunktion für die Windenergieanlagen 1 - 5 aus. Der Parkmaster 7 ist zu diesem Zweck über eine Datenleitung 74 mit den Windenergieanlagen 1 - 5 verbunden, sodass der Parkmaster 7 mit den Windenergieanlagen 1 - 5 kommunizieren kann. Insbesondere ermittelt der Parkmaster 7 für jede der Windenergieanlagen 1 - 5 einen Spannungssollwert.

Um die Spannungssollwerte zu ermitteln, verarbeitet der Parkmaster 7 verschiedene Eingangsgrößen. Dazu gehören Vorgaben des Netzbetreibers, die dem Parkmaster 7 über einen Eingang 72 zugeführt werden. Die Vorgabe des Netzbetreibers kann beispielsweise einen Spannungssollwert am Übergabepunkt 69 betreffen. Außerdem verarbeitet der Parkmaster 7 Informationen über den Ist-Zustand des Netzes. Der Parkmaster 7 erhält diese Informationen von einer Messvorrichtung 65, die in der Nähe des Übergabepunkts 69 Größen wie die tatsächliche Spannung, die tatsächliche Wirkleistung oder die tatsächliche Blindleistung messen. Diese Eingangsgrößen werden in dem Parkmaster 7 zusammengeführt und verarbeitet, um Spannungssollwerte für die einzelnen Windenergieanlagen 1 - 5 zu ermitteln.

Gemäß der Erfindung ist nahe dem Übergabepunkt 69 außerdem eine Messvorrichtung 62 für die Netzfrequenz angeordnet. Die Messvorrichtung 62 misst den Istwert der Netzfrequenz und leitet die Information über einen Eingang 71 zu dem Parkmaster 7. In dem Parkmaster 7 wird der Istwert der Netzfrequenz mit einem Sollwert der Netzfrequenz verglichen. Bei einer Abweichung wird eine Steuervorgabe für die Spannung ermittelt.

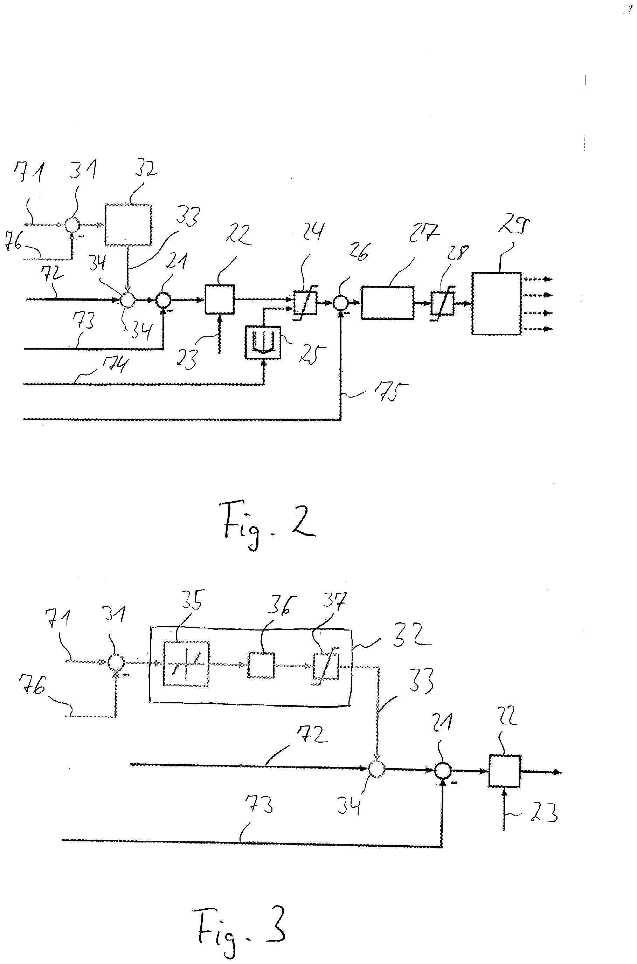

Der Parkmaster 7 umfasst ein erstes Steuermodul 20 und ein zweites Steuermodul 30, deren Funktionsweisen anhand der Figuren 2 und 3 näher erläutert werden. Der über den Eingang 72 erhaltene Sollwert für die Spannung am Übergabepunkt 69 wird in einem Subtraktionsglied 21 mit dem Istwert der Spannung am Übergabepunkt 69 verglichen, der von der Messvorrichtung 65 über einen Eingang 73 zugeführt wird. Die Spannungsabweichung wird einem Rechenbaustein 22 zugeführt. Der Rechenbaustein 22 erhält über einen weiteren Eingang 23 die Information, welche der Windenergieanlagen 1 - 5 aktuell in Betrieb sind, und ermittelt daraus einen Sollwert für die Blindleistung am Übergabepunkt 69. In einem Begrenzerglied 24 wird geprüft, ob der so ermittelte Sollwert für die Blindleistung innerhalb der Systemgrenzen liegt. Dabei wird eine Information über die tatsächliche Wirkleistung am Übergabepunkt 69 verarbeitet, die dem Begrenzerglied 24 von der Messvorrichtung 65 über einen Eingang 74 zugeführt wird. Der über den Eingang 74 erhaltene Messwert wird zuvor in einem Baustein 25 auf die Verletzung bestimmter Grenzwerte geprüft. Der Baustein 25 ermittelt anhand der gemessenen Wirkleistung die dynamischen Grenzen, welche im Begrenzerglied 24 zur Begrenzung des Blindleistungssollwerts genutzt werden.

In einem weiteren Subtraktionsglied 26 wird der so begrenzte Sollwert für die Blindleistung am Übergabepunkt 69 mit der tatsächlichen Blindleistung am Übergabepunkt 69 verglichen. Diese Information wird dem Parkmaster von der Messvorrichtung 65 über einen Eingang 75 zugeführt. Die Abweichung zwischen Istwert und Sollwert wird einem PI-Regler 27 zugeführt, der aus der Abweichung einen für die Windenergieanlagen 1 - 5 bestimmten Spannungssollwert ermittelt. Der Spannungssollwert wird, nachdem in dem Baustein 28 eine weitere Überprüfung auf Verletzung von Systemgrenzen durchgeführt wurde, über einen Verteiler 29 auf die einzelnen Windenergieanlagen 1 - 5 aufgeteilt.

Dieser Teil der Steuerung bildet das erste Steuermodul 20, in dem unabhängig von der Netzfrequenz ein Spannungssollwert für die Windenergieanlagen 1 - 5 ermittelt wird.

Der Parkmaster 7 umfasst außerdem ein zweites Steuermodul 30, in dem anhand einer Frequenzabweichung eine Steuervorgabe für die Spannung ermittelt wird. Das zweite Steuermodul 30 umfasst gemäß Fig. 2 ein Subtraktionsglied 31 und ein Steuerglied 32. Die in dem Steuerglied 32 ermittelte Steuervorgabe wird über einen Ausgang 33 zu einem Additionsglied 34 geleitet, in dem die Steuervorgabe auf den Spannungssollwert aufgeschaltet wird, den der Parkmaster 7 über den Eingang 72 erhält. Der so veränderte Spannungssollwert bildet eine Eingangsgröße für das erste Steuermodul 20. Im Rahmen der Zeitkonstante des PI-Reglers regelt sich das erste Steuermodul 20 auf den neuen Sollwert ein und ermittelt neue Spannungssollwerte als Ausgangsgrößen, die an die Windenergieanlagen 1 - 5 geleitet werden.

Der über den Eingang 71 zugeführte Messwert für den Istwert der Netzfrequenz wird in dem Subtraktionsglied 31 mit dem Sollwert 76 der Netzfrequenz verglichen, der in diesem Beispiel bei 50 Hz liegt. Gemäß Fig. 3 wird die Differenz einem Totbandmodul 35 zugeführt, in dem die Differenz gleich null gesetzt wird, solange der Istwert der Frequenz sich innerhalb eines Totbands bewegt, das sich von 49,5 Hz bis 50,5 Hz erstreckt. Bei einer Frequenzabweichung von mehr als 0,5 Hz wird die Differenz weitergeleitet an ein Proportionalglied 36, das die Frequenzabweichung in eine Spannungsabweichung umrechnet. Beispielsweise kann die Spannungsabweichung auf 0,025 pu je Hertz Frequenzabweichung gesetzt werden. Die Einheit pu ist eine relative Einheit, die auf die Nennspannung bezogen ist, wobei 0,025 pu einer Abweichung von 2,5 % bezogen auf die Nennspannung entspricht.

Die in dem Proportionalglied 36 ermittelte Spannungsabweichung wird in einem Begrenzerglied 37 nach oben und nach unten hin auf einen Maximalwert begrenzt. Der Maximalwert kann beispielsweise bei einer Spannungsabweichung von 0,05 pu liegen. Das Totbandmodul 35, dass Proportionalglied 36 und das Begrenzerglied 37 bilden zusammen das Steuerglied 32. Die in dem Steuerglied 32 ermittelte Spannungsabweichung wird über den Ausgang zu dem Additionsglied 34 geleitet und auf den Spannungssollwert 72 aufgeschaltet. Bei einer Steuervorgabe von +0,05 pu erhöht sich der Spannungssollwert 72, der in dem ersten Steuermodul 20 verarbeitet wird, um 5 %. Bei einer Steuervorgabe von -0,02 pu vermindert sich entsprechend der Spannungssollwert um 2 %.

Eine Frequenzabweichung nach oben ergibt sich regelmäßig dann, wenn mehr elektrische Leistung in das Netz eingespeist wird als die Verbraucher abnehmen. Indem über die Steuervorgabe des zweiten Steuermoduls 30 der Spannungssollwert 72 erhöht wird, ergibt sich eine höhere Ist-Spannung im Übertragungsnetz 9. Die an das Übertragungsnetz 9 angeschlossenen Verbraucher, die einen konstanten elektrischen Widerstand haben, die also ohne Leistungselektronik direkt mit dem Netz gekoppelt sind, nehmen mehr Leistung auf und leisten dadurch einen indirekten Beitrag zur Stabilisierung des Netzes. Umgekehrt sinkt die Leistungsaufnahme dieser Verbraucher, wenn der Istwert der Netzfrequenz niedriger ist als der Sollwert, was ebenfalls zur Stabilisierung des Netzes beiträgt.

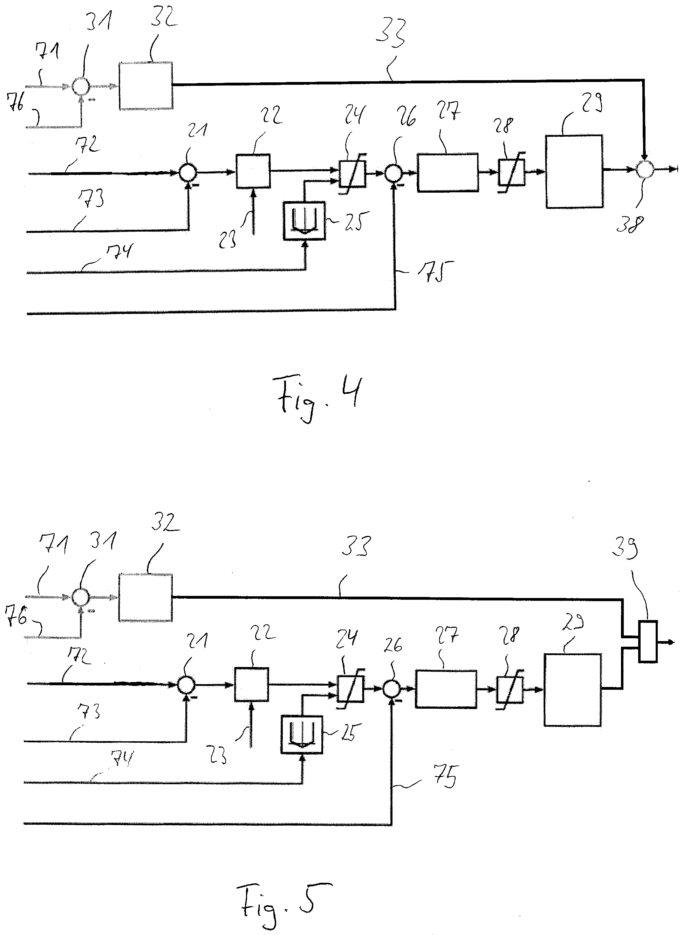

In der alternativen Ausführungsform der Fig. 4 wird die von dem Steuerglied 32 ermittelte Steuervorgabe für die Spannung nicht zum Eingang, sondern zum Ausgang des ersten Steuermoduls 20 geleitet und dort mit einem Additionsglied 38 auf die Spannungssollwerte aufgeschaltet, die von dem Verteiler 29 zu den Windenergieanlagen 1 - 5 geleitet werden. Die stabilisierende Wirkung auf das Übertragungsnetz 9 ist entsprechend. Bei dieser Ausführungsform ist es insbesondere möglich, dass das Additionsglied 38 und das zweite Steuermodul 30 Elemente einer Windenergieanlage sind, während das erste Steuermodul 20 auf der Ebene des Parkmasters 7 angeordnet ist. Das zweite Steuermodul 30 und das Additionsglied 38 können in jeder Windenergieanlage, die Vorgaben von dem ersten Steuermodul 20 erhält, separat vorgesehen sein.

Bei der weiteren Ausführungsform, die in Fig. 5 dargestellt ist, ermittelt das Steuerglied 32 nicht einen relativen Wert für die Spannungsvorgabe, die auf einen absoluten Spannungswert bezogen ist, sondern am Ausgang 33 des Steuerglied 32 liegt direkt ein absoluter Wert für die Spannungsvorgabe an. Diese Steuervorgabe wird in einem Totbandmodul 39 mit einem Spannungssollwert vom Verteiler 29 zusammengeführt. Solange die Frequenzabweichung kleiner als 0,5 Hz ist, der Istwert der Netzfrequenz also innerhalb des Totbands liegt, hat der Spannungssollwert vom Verteiler 29 Vorrang. Verlässt der Istwert der Netzfrequenz das Totband, schaltet das Totbandmodul 39 um und die Steuervorgabe 33 vom Steuerglied 32 hat Vorrang. Die stabilisierende Wirkung auf das Netz ist die gleiche wie bei den zuvor beschriebenen Ausführungsformen. Bei dieser Ausführungsform ist es insbesondere möglich, dass das Totbandmodul 39 und das zweite Steuermodul 30 Elemente einer Windenergieanlage sind, während das erste Steuermodul 20 auf der Ebene des Parkmasters 7 angeordnet ist. Das zweite Steuermodul 30 und das Totbandmodul können in jeder Windenergieanlage, die Vorgaben von dem ersten Steuermodul 20 erhält, separat vorgesehen sein.

## Patentansprüche

1. Steuerung für eine Windenergieanlage/einen Windpark (1 - 5), wobei die Steuerung (7) dazu ausgelegt ist, Messwerte (65) und/oder externe Anforderungen (72) zu verarbeiten, um Steuervorgaben für den Betrieb der Windenergieanlage/des Windparks (1 - 5) zu ermitteln, wobei die Steuerung (7) einen Eingang für einen Istwert (71) der Netzfrequenz aufweist, **dadurch gekennzeichnet, dass** die Steuerung (7) eine Abweichung des Istwerts (71) der Netzfrequenz von einem Sollwert (76) der Netzfrequenz in eine Steuervorgabe (33) für die Spannung im Netz (9) umsetzt.

2. Steuerung nach Anspruch 1, **dadurch gekennzeichnet, dass** die Steuervorgabe (33) für die Spannung in Form eines Spannungssollwerts an einen Blindleistungsregler (18) geleitet wird.

3. Steuerung nach Anspruch 1 oder 2, **dadurch gekennzeichnet, dass** die Steuervorgabe (33) für die Spannung auf die Momentan-Spannung (72) bezogen ist.

4. Steuerung nach einem der Ansprüche 1 bis 3, **dadurch gekennzeichnet, dass** die Steuervorgabe (33) einen Schwellwert für die Spannung definiert, der in einer Richtung nicht überschritten werden darf.

5. Steuerung nach einem der Ansprüche 1 bis 4, **gekennzeichnet durch** einen Begrenzer (37) für die Steuervorgabe (33), so dass ein Überschreiten der Systemgrenzen vermieden wird.

6. Steuerung nach einem der Ansprüche 1 bis 5, **gekennzeichnet durch** ein Frequenz-Totband (35), innerhalb dessen die Steuervorgabe (33) passiv ist.

7. Steuerung nach einem der Ansprüche 1 bis 6, **dadurch gekennzeichnet, dass** sie ein erstes Steuermodul (20) und ein zweites Steuermodul (30) umfasst, wobei das erste Steuermodul (20) unter Berücksichtigung der gemessenen Spannung, der gemessenen Wirkleistung und/oder der gemessenen Blindleistung einen Spannungssollwert ermittelt, und wobei das zweite Steuermodul (30) eine Abweichung des Istwerts (71) der Netzfrequenz von dem Sollwert (76) der Netzfrequenz in eine Steuervorgabe (33) für die Spannung umsetzt.

8. Steuerung nach Anspruch 7, **dadurch gekennzeichnet, dass** das erste Steuermodul (20) Vorrang hat, wenn die Netzfrequenz innerhalb eines Totbands (39) liegt.

9. Steuerung nach Anspruch 8, **dadurch gekennzeichnet, dass** die Steuervorgabe (33) des zweiten Steuermoduls (30) auf den von dem zweiten Steuermodul (20) ermittelten Spannungssollwert aufgeschaltet wird, wenn der Istwert (71) der Netzfrequenz außerhalb eines Totbands (35) liegt.

10. Steuerung nach Anspruch 7, **dadurch gekennzeichnet, dass** die Steuervorgabe (33) des zweiten Steuermoduls (30) in dem ersten Steuermodul (20) verarbeitet wird.

11. Steuerung nach Anspruch 10, **dadurch gekennzeichnet, dass** die Steuervorgabe (33) des zweiten Steuermoduls (30) auf einen Spannungssollwert (72) aufgeschaltet wird, der in dem ersten Steuermodul (20) als Eingangsgröße verarbeitet wird.

12. Steuerung nach einem der Ansprüche 7 bis 11, **dadurch gekennzeichnet, dass** das erste Steuermodul (20) auf der Ebene eines Parkmasters (7) angeordnet ist und dass das zweite Steuermodul (30) Element einer Windenergieanlage ist.

13. Steuerung nach einem der Ansprüche 1 bis 11, **dadurch gekennzeichnet, dass** die Steuerung ein Parkmaster (7) ist, der Vorgaben für eine Mehrzahl von Windenergieanlagen (1 - 5) ermittelt.

14. Verfahren zum Steuern einer Windenergieanlage/eines Windparks (1 - 5), bei dem Messwerte (65) und/oder externe Anforderungen (72) verarbeitet werden, um Steuervorgaben für den Betrieb der Windenergieanlage/des Windparks (1 - 5) zu ermitteln, und bei dem ein Istwert (71) der Netzfrequenz verarbeitet wird, **dadurch gekennzeichnet, dass** eine Abweichung des Istwerts (71) der Netzfrequenz von einem Sollwert (76) der Netzfrequenz in eine Steuervorgabe (33) für die Spannung im Netz umgesetzt wird.

15. Verfahren nach Anspruch 14, **dadurch gekennzeichnet, dass** die Steuervorgabe (33) für die Spannung umgesetzt wird in eine Blindleistungsanforderung (18) für eine Windenergieanlage (1 - 5).

## Claims

1. Control system for a wind energy installation/a wind farm (1-5), wherein the control system (7) is designed to process measurement values (65) and/or external demands (72) in order to identify control presets for the operation of the wind energy installation/the wind farm (1-5), wherein the control system (7) has an input for an actual value (71) of the grid frequency, **characterized in that** the control system (7) converts a deviation of the actual value (71) of the grid frequency from a setpoint value (76) of the grid frequency to a control preset (33) for the voltage in the grid (9).

2. Control system according to Claim 1, **characterized in that** the control preset (33) for the voltage is led in the form of a voltage setpoint value to a reactive power regulator (18).

3. Control system according to Claim 1 or 2, **characterized in that** the control preset (33) for the voltage is related to the instantaneous voltage (72).

4. Control system according to one of Claims 1 to 3, **characterized in that** the control preset (33) defines a threshold value for the voltage, which threshold value may not be exceeded in one direction.

5. Control system according to one of Claims 1 to 4, **characterized by** a limiter (37) for the control preset (33) so that exceeding of the system limits is prevented.

6. Control system according to one of Claims 1 to 5, **characterized by** a frequency dead band (35), within which the control preset (33) is passive.

7. Control system according to one of Claims 1 to 6, **characterized in that** said control system comprises a first control module (20) and a second control module (30), wherein the first control module (20) identifies a voltage setpoint value taking into account the measured voltage, the measured active power and/or the measured reactive power, and wherein the second control module (30) converts a deviation of the actual value (71) of the grid frequency from the setpoint value (76) of the grid frequency to a control preset (33) for the voltage.

8. Control system according to Claim 7, **characterized in that** the first control module (20) takes priority when the grid frequency is within a dead band (39).

9. Control system according to Claim 8, **characterized in that** the control preset (33) of the second control module (30) is applied to the voltage setpoint value identified by the second control module (20) when the actual value (71) of the grid frequency is outside a dead band (35).

10. Control system according to Claim 7, **characterized in that** the control preset (33) of the second control module (30) is processed in the first control module (20) .

11. Control system according to Claim 10, **characterized in that** the control preset (33) of the second control module (30) is applied to a voltage setpoint value (72), which is processed as an input variable in the first control module (20).

12. Control system according to one of Claims 7 to 11, **characterized in that** the first control module (20) is arranged at the level of a farm master (7) and **in that** the second control module (30) is an element of a wind energy installation.

13. Control system according to one of Claims 1 to 11, **characterized in that** the control system is a farm master (7), which identifies presets for a plurality of wind energy installations (1-5).

14. Method for controlling a wind energy installation/a wind farm (1-5), in which measurement values (65) and/or external demands (72) are processed in order to identify control presets for the operation of the wind energy installation/the wind farm (1-5), and in which an actual value (71) of the grid frequency is processed, **characterized in that** a deviation of the actual value (71) of the grid frequency from a setpoint value (76) of the grid frequency is converted to a control preset (33) for the voltage in the grid.

15. Method according to Claim 14, **characterized in that** the control preset (33) for the voltage is converted to a reactive power demand (18) for a wind energy installation (1-5).

## Revendications

1. Commande d'éolienne /de parc éolien (1 - 5) dans laquelle la commande (7) est conçue pour traiter des valeurs de mesure (65) et/ou des besoins externes (72) afin de déterminer des spécifications de commande pour le fonctionnement de l'éolienne /du parc éolien (1 - 5), dans laquelle la commande (7) comporte une entrée pour une valeur réelle (71) de la fréquence du réseau, **caractérisée en ce que** la commande (7) convertit un écart de la valeur réelle (71) de la fréquence du réseau par rapport à une valeur de consigne (76) de la fréquence du réseau en une spécification de commande (33) pour la tension du réseau (9).

2. Commande selon la revendication 1, **caractérisée en ce que** la spécification de commande (33) pour la tension est transmise sous la forme d'une valeur de consigne de tension à un régulateur de puissance réactive (18) .

3. Commande selon la revendication 1 ou 2, **caractérisée en ce que** la spécification de commande (33) pour la tension est définie par rapport à la tension instantanée (72).

4. Commande selon l'une des revendications 1 à 3, **caractérisée en ce que** la spécification de commande (33) définit une valeur de seuil de tension qui ne doit pas être dépassée dans une direction.

5. Commande selon l'une des revendications 1 à 4, **caractérisée par** un limiteur (37) pour la spécification de commande (33) permettant d'éviter un dépassement des limites du système.

6. Commande selon l'une des revendications 1 à 5, **caractérisée par** une bande morte de fréquence (35) à l'intérieur de laquelle la spécification de commande (33) est passive.

7. Commande selon l'une quelconque des revendications 1 à 6, **caractérisée en ce qu'**elle comprend un premier module de commande (20) et un second module de commande (30), dans laquelle le premier module de commande (20) détermine une valeur de consigne de tension en tenant compte de la tension mesurée, de la puissance active mesurée et/ou de la puissance réactive mesurée, et dans laquelle le second module de commande (30) convertit un écart de la valeur réelle (71) de la fréquence du réseau par rapport à la valeur de consigne (76) de la fréquence du réseau en une spécification de commande (33) pour la tension.

8. Commande selon la revendication 7, **caractérisée en ce que** le premier module de commande (20) est prioritaire si la fréquence du réseau se situe à l'intérieur d'une bande morte (39).

9. Commande selon la revendication 8, **caractérisée en ce que** la spécification de commande (33) du second module de commande (30) est reliée à la valeur de consigne de tension déterminée par le second module de commande (20) si la valeur réelle (71) de la fréquence du réseau se situe en dehors d'une bande morte (35).

10. Commande selon la revendication 7, **caractérisée en ce que** la spécification de commande (33) du second module de commande (30) est traitée dans le premier module de commande (20).

11. Commande selon la revendication 10, **caractérisée en ce que** la spécification de commande (33) du second module de commande (30) est reliée à une valeur de consigne de tension (72) qui est traitée dans le premier module de commande (20) en tant que grandeur d'entrée.

12. Commande selon l'une des revendications 7 à 11, **caractérisée en ce que** le premier module de commande (20) est disposé au niveau d'un maître de parc (7) et **en ce que** le second module de commande (30) est un élément d'une éolienne.

13. Commande selon l'une des revendications 1 à 11, **caractérisée en ce que** la commande est un maître de parc (7) qui détermine les spécifications pour une pluralité d'éoliennes (1 - 5).

14. Procédé de commande d'éolienne /de parc éolien (1 - 5), dans lequel des valeurs de mesure (65) et/ou des besoins externes (72) sont traités pour déterminer des spécifications de commande pour le fonctionnement de l'éolienne /du parc éolien (1 - 5) et dans lequel une valeur réelle (71) de la fréquence du réseau est traitée, **caractérisé en ce qu'**un écart de la valeur réelle (71) de la fréquence du réseau par rapport à une valeur de consigne (76) de la fréquence du réseau est converti en une spécification de commande (33) de la tension du réseau.

15. Procédé selon la revendication 14, **caractérisé en ce que** la spécification de commande (33) pour la tension est convertie en un besoin de puissance réactive (18) pour une éolienne (1 - 5).
